# EUROPÄISCHE PATENTSCHRIFT

(11) **EP 1 373 992 B1**
(45) Veröffentlichungstag und Bekanntmachung des Hinweises auf die Patenterteilung: **25.04.2007**
(21) Anmeldenummer: 02732381.5
(22) Anmeldetag: 08.04.2002
(51) Int. Cl.: G05B 19/408, G05B 1/00

(54) **VERFAHREN ZUM SYNCHRONISIERTEN BETRIEB VON MASCHINEN MIT DURCH EINZELANTRIEBE ANGETRIEBENEN ACHSEN**
METHOD FOR THE SYNCHRONISED OPERATION OF MACHINES HAVING AXES ACTUATED BY SINGLE DRIVES
PROCEDE POUR FAIRE FONCTIONNER DE MANIERE SYNCHRONISEE DES MACHINES PRESENTANT DES ARBRES ENTRAINES PAR DES ORGANES D'ENTRAINEMENT INDIVIDUELS

(30) Priorität: 06.04.2001 DE 10117455
(43) Veröffentlichungstag der Anmeldung: 02.01.2004
(73) Patentinhaber: Rexroth Indramat GmbH, 97816 Lohr am Main (DE)
(72) Erfinder: GABLER, Thomas, 97816 Lohr am Main (DE); STEUDEL, Karin, 97816 Lohr am Main (DE); STAUB, Dieter, 97848 Rechtenbach (DE)
(74) Vertreter: Thürer, Andreas
(86) Internationale Anmeldenummer: PCT/DE2002/001284
(87) Internationale Veröffentlichungsnummer: WO 2002/082192

(56) Entgegenhaltungen:
- EP-A- 0 816 963
- EP-A- 0 930 552
- DE-A- 19 527 199
- DE-A- 19 934 044
- US-A- 5 659 480

## Beschreibung

Die Erfindung betrifft ein Verfahren zum synchronisierten Betrieb von Maschinen mit mehreren Achsen, wobei die Achsen durch jeweils zugehörige Einzelantriebe untereinander synchronisiert nach Maßgabe einer elektronischen, zeitlichen Leitachsfunktion angetrieben werden. Eine solche Maschine hat u.a. Transport- und Bearbeitungsachsen, z.B. mit entsprechenden Walzen, die mit Servoantrieben, bestehend aus Servomotor und Antrieb, angetrieben werden. Hier wird der Einfachheit halber lediglich auf die Achsen (Servoachsen) Bezug genommen.

Solche Maschinen können beispielsweise Druckmaschinen, wie Rotationsdruckmaschinen oder Bogendruckmaschinen, Papierverarbeitungsmaschinen sowie Verpackungsmaschinen und Produktionsmaschinen beispielsweise Produktionsstraßen sein. Generell kommt dieses Verfahren an vergleichsweise großen, automatisierten Maschinen zum Einsatz, wo mehrere, durch Einzelantriebe angetriebene Achsen mittels einer Leitachse untereinander synchronisiert werden.

Dieses Prinzip der sog. "elektronischen Königswelle" hat sich bei Bearbeitungsmaschinen von Materialbahnen mittlerweile fast vollständig durchgesetzt. Dabei folgen die betreffenden, durch zugehörige Einzelantriebe angetriebenen Achsen (durch die Synchronisation der zugehörigen Antriebe oder über übergeordnete Steuerungen) einer übergeordneten, zeitlichen Leitachsfunktion und werden dadurch synchronisiert. Die Leitachsfunktion korrespondiert mit einer Momentanposition einer, z.B. virtuellen, d.h. elektronisch generierten, oder einer realen Leitachse. Sie kann beispielsweise den zeitlichen Verlauf der Momentanposition, d.h. die Winkelstellung der Leitachse wiedergeben; sie kann aber auch den zeitlichen Verlauf der Umdrehungsgeschwindigkeit oder anderer, mit der Momentanposition der Leitachse korrespondierender Parameter beinhalten. Insbesondere ist sie eine elektronische, zeitliche Sollwertfolge. Folgen bedeutet in einem solchen Zusammenhang, dass die Bewegung an der entsprechenden Achse unmittelbar oder über eine Umsetzungsfunktion, die einer mechanischen Umsetzung bezüglich der Leitachse entspricht, von der Leitachsfunktion abgeleitet wird. Dadurch werden Getriebe, Kurvenscheiben, Offsets oder dergleichen mechanische Elemente elektronisch emuliert.

Bei einer der genannten (automatisierten) Maschinen ist eine Vielzahl solcher mechanischer Umsetzungen wie Getriebe, Kupplungen etc. erforderlich.

Hierzu ist es bekannt, solche abgeleiteten Achsen nach Maßgabe jeweils zugehöriger Umsetzungsfunktionen, die den vorbestimmten, mechanischen Umsetzungen bezüglich der Leitachse entsprechen, jeweils von der Leitachse elektronisch abzuleiten. Bei einer großen Anzahl von Achsen und damit einer entsprechend großen Anzahl von Antrieben entsteht hierbei das Problem, dass sich aufgrund des vorbestimmten Aktualisierungszyklus der beteiligten Leitachsfunktion ein zeitlicher Jitter in Abhängigkeit von der Zahl der beteiligten Achsen nach Art einer Fehlerfortpflanzung aufaddiert. Die aufsummierte Gesamtabweichung ist umso größer, je mehr Achsen an einem Aktualisierungszyklus beteiligt sind. Zudem ist der apparative und technische Aufwand sehr hoch, an den jeweiligen Achsen jeweils eine entsprechende, mechanische Umsetzung vorzusehen.

Aus der EP 0 816 963 A2 ist ein Verfahren zum Betrieb eines Antriebssystems und eine Vorrichtung zur Durchführung dieses Verfahrens bekannt. Dieses System umfasst wenigstens zwei Antriebsgruppen mit je einer Antriebssteuerung und mindestens einem Antrieb. Diese Antriebe werden über ein globales Signal anlagenweit synchronisiert.

Es ist daher Aufgabe der vorliegenden Erfindung, ein Verfahren der eingangs genannten Art anzugeben, das - insbesondere bei einer großen Anzahl von zu regelnden Achsen - ein höheres Maß an Synchronität der zu korrigierenden Achsen gegenüber dem Stand der Technik gewährleistet und gleichzeitig eine einfache Inbetriebnahme bei vergleichsweise geringem, apparativem Aufwand erlaubt.

Diese Aufgabe wird gelöst durch die Merkmale des Anspruchs 1. Die Erfindung bietet den Vorteil, dass die Achsen mit wesentlich genauerer Synchronität - d.h. mit einer insgesamt geringeren Abweichung von dem durch die Leitachsfunktion vorgegebenen Sollwertzyklus - angetrieben werden können. Zudem ist der apparative Aufwand verringert und die Inbetriebnahme wesentlich erleichtert. Insgesamt kann dadurch auch eine größere Anzahl von Achsen nach Maßgabe der "elektronischen Welle" - unter Wahrung der Synchronität - angetrieben, werden.

Diese Vorteile werden dadurch erreicht, dass mehrere Achsen, die sich hinsichtlich der mechanischen Umsetzung entsprechen, zu zumindest einer Gruppe von Achsen zusammengefasst werden. Dabei umfasst eine Gruppe von Achsen, die sich entsprechen, diejenigen Achsen, die bezüglich einer Leitachse eine gemeinsame Umsetzung aufweisen; dies können beispielsweise Achsgruppen mit gleicher oder entsprechender Getriebeübersetzung, einem entsprechenden Kupplungsverhalten, einem gemeinsamen Kurvenscheibenverhältnis oder Kombinationen aus den vorgenannten Umsetzungen sein. Für diese Achsen ist damit die gleiche mechanische Umsetzung zu vollziehen.

Der apparative Aufwand und der Bearbeitungsaufwand für die mechanische Umsetzung der Achsen sinkt mit der Erfindung drastisch. Denn durch die Zusammenfassung von sich entsprechenden Achsen zu Gruppen von Achsen, die einer elektronischen, zeitlichen Folgeleitachsfunktion folgen, entfallen die entsprechenden Umsetzungen an den Einzelachsen. Die elektronische Abbildung entspricht dadurch einer mechanischen Realisierung. Die mechanischen Parameter/Elemente werden durch die elektronischen Modelle unmittelbar nachgebildet.

Die Achsen einer Gruppe folgen - vorzugsweise unmittelbar und direkt, d.h. ohne Einwirkung von weiteren Leitachsen - der elektronischen, zeitlichen Folgeleitachsfunktion. Dies bedeutet, dass die Bewegung an der entsprechenden Achse unmittelbar oder über eine weitere (elektronische) Umsetzung von der zeitlichen Folgeleitachsfunktion abgeleitet wird. Die Folgeleitachsfunktion korrespondiert ebenfalls mit einer Momentanposition einer Folgeleitachse. Soweit gilt das oben zur Leitachse gesagte entsprechend.

Durch diese Kaskadierung Leitachse - abgeleitete Leitachse - ... - Antrieb wird für die genannte Gruppe von Achsen lediglich die Folgeleitachsfunktion für den Antrieb der Achsen verwendet. Dies ist eine wesentliche Vereinfachung gegenüber dem Stand der Technik, wo ausschließlich die Leitachse für die Antriebe aller Achsen der Maschine maßgeblich war und die Umsetzung auf beispielsweise Antriebsebene an jeder Achse einzeln erfolgen musste. Insoweit wird dieser erhebliche Aufwand durch die Erfindung praktisch vermieden bzw. wesentlich verringert und durch die übergeordnete Umsetzung in eine Folgeleitachse für mehrere Antriebe ersetzt.

Hierzu wird die Folgeleitachsfunktion aus einer Verknüpfung der maßgeblichen Leitachsfunktion mit einer der vorgesehenen mechanischen Umsetzung entsprechenden Umsetzungsfunktion gebildet. In der Umsetzungsfunktion sind vorzugsweise alle Informationen über die gewünschte bzw. erforderliche mechanische Umsetzung abgebildet/enthalten. Wesentlich ist, dass die genannte mechanische Umsetzung allen Achsen der Gruppe gemein ist. Darüber hinaus können auch noch einzelne Achsen mit weiteren mechanischen Umsetzungen betrieben sein.

Die Umsetzungsfunktion kann dabei die entsprechend elektronisch umgesetzte Umwandlungsvorschrift der Leitachsfunktion sein, die der mechanischen Umsetzung entspricht, beispielsweise bei einer Getriebefunktion das Übersetzungsverhältnis. Hierauf wird später noch näher eingegangen.

Jedenfalls resultiert aus der Verknüpfung der zeitlichen, elektronischen Leitachsfunktion mit der betreffenden Umsetzungsfunktion - die in der Regel nicht zeitlich ist - eine entsprechende elektronische, zeitliche Folgeleitachsfunktion, die die genannten Informationen bezüglich der mechanischen Umsetzung der Gruppe von Achsen enthält.

Durch die einheitliche Folgeleitachsfunktion für eine Gruppe von Achsen (dies kann im Ausnahmefall auch eine einzelne Achse sein, vorzugsweise aber eine Vielzahl von Achsen), wird die Synchronität der Einzelachsen verbessert. Zunächst einmal wird nämlich die Zahl der Antriebe, die bezüglich der Folgeleitachse einem Aktualisierungszyklus zugehören, insgesamt verringert. Die Anzahl der Achsen, die einer erfindungsgemäßen Folgeleitachsfunktion bzw. mehreren Folgeleitachsfunktionen folgen, ist in der Regel stets geringer als die Anzahl der Achsen, die im Stand der Technik der Leitachse folgen und dann noch zusätzlich von dieser durch die mechanischen Umsetzungen einzeln abgeleitet werden müssen. Die Zahl der entfallenden Umsetzungen entspricht der Zahl aller Achsen, die zu Gruppen zusammengefasst werden, vermindert um die Zahl der Gruppen selber. Hieraus wird ersichtlich, dass in der Regel bei Anwendung der Erfindung die Zahl der notwendigen, mechanischen Umsetzungen ein Bruchteil der im Stand der Technik vorhandenen Umsetzungen betragen dürfte.

Durch die Verwendung einer einheitlichen Umsetzungsfunktion, die nach Maßgabe einer bezüglich der Achsen der Gruppe übergeordneten, mechanischen Umsetzung berechnet wird und für alle Achsen der Gruppe übergeordnet und einheitlich ist, kann gegenüber dem Stand der Technik eine Vielzahl von Einzelumsetzungen an den Achsen - wie oben genannt - entfallen. Dabei wird aber trotzdem - schon durch die Verringerung der beteiligten Zykluszeiten - ein hohes Maß an Synchronität erreicht, so dass die Erfindung insoweit einen doppelten Nutzen aufweist.

Die für die Gruppe von Achsen lediglich einmalig zu berechnende Umsetzungsfunktion kann für alle Achsen praktisch gleichzeitig und einheitlich verwendet werden und bietet somit von selbst ein hohes Maß an Synchronität der Achsen, ohne dass dafür weitere Vorkehrungen getroffen werden müssten, im Gegenteil fällt - wie oben genannt - eine Vielzahl von Einzelumsetzungen fort.

Die technischen Vorkehrungen zur Übertragung von Sollwertzyklen an die Antriebe der Gruppe sind bei einer erfindungsgemäßen Maschine ohnehin vorhanden, diese können für die Erfindung ohne weiteres genutzt werden, so dass auch diesbezüglich praktisch kein erhöhter, apparativer Aufwand anfällt.

Um die Genauigkeit der Achsbewegung zu erhalten, ist ein Übertragungsprotokoll mit einer hohen Bandbreite bevorzugt. Diese soll zumindest 32 bit betragen und gewährleisten, dass die Genauigkeit der Achsbewegung auch unter der Einwirkung der Umsetzungsfunktion erhalten bleibt.

Bevorzugte Ausgestaltungen der vorliegenden Erfindung sind in den Unteransprüchen beschrieben.

Je nach Art der maßgeblichen, mechanischen Umsetzungen ist die Art der Umsetzungsfunktion vorbestimmt. Der Erfindung ist bereits dann schon für eine Vielzahl von Anwendungsfällen, in denen lediglich ein Positionsoffset für eine Gruppe von Achsen erforderlich ist, geeignet, wenn die Umsetzungsfunktion einen durch die mechanische Umsetzung bestimmten Positionsoffset gegenüber der Momentanposition der Leitachse umfasst. Die Umsetzungsfunktion besteht dann im wesentlichen aus der Umsetzungsvorschrift, einen konstanten oder sich zeitlich ändernden Positionsoffset zu der Leitachs-Momentanposition zu addieren. Das Maß des Positionsoffsets und sein zeitliches Verhalten sind vorzugsweise wahlfrei vorbestimmbar. Es kann beispielsweise ein im wesentlichen konstanter Posititionsoffset über eine vergleichsweise lange Zeitdauer vorgesehen sein; andererseits kann der Positionsoffset sich auch nach Maßgabe der beteiligten Zeitkonstanten zeitlich ändern. Dann kann schon über den regelungstechnisch einfach zu handhabenden Positionsoffset eine Vielzahl von mechanischen Umsetzungen modelliert werden.

Zusätzlich oder alternativ kann vorgesehen sein, dass die Umsetzungsfunktion eine durch die mechanische Umsetzung bestimmte, einer Getriebeübersetzung bezüglich der Leitachse entsprechende Funktion umfasst. Dann umfasst die Umsetzungsfunktion im wesentlichen den - konstanten oder sich zeitlich (siehe oben) ändernden - Getriebefaktor, nämlich die besagte Getriebeübersetzung, die für alle Achsen der Gruppe gleichermaßen maßgeblich ist. Die Folgeleitachsfunktion ist dann praktisch eine Leitachse für die Achsen der Gruppe, die bezüglich der (übergeordneten) Leitachsfunktion eine wie oben beschriebene Getriebeübersetzung aufweist.

Des weiteren kann alternativ oder zusätzlich vorgesehen sein, dass die Umsetzungsfunktion eine durch die mechanische Umsetzung bestimmte, einer Kurvenscheibenfunktion und/oder Kupplungsfunktion bezüglich der Leitachse entsprechende Funktion umfasst. Dann gilt das oben gesagte entsprechend für die "elektronische" Kurvenscheibe/Kupplung.

Die vorgenannten Ausführungsbeispiele haben den Vorteil, dass der funktionale Zusammenhang vorgegeben ist und vergleichsweise einfach elektronisch modelliert werden kann. Trotzdem sind mit diesen Ausgestaltungen - einzeln oder in Kombination - eine Vielzahl und praktisch alle der üblichen Anforderungen an die mechanische Umsetzung von Achsen an den genannten Maschinen realisierbar. Dadurch ist eine mögliche Beschränkung auf lediglich diese Methoden der Ableitung der Folgeleitachsfunktion gegeben, durch die die Erfindung aber praktisch für alle auftretenden Anwendungsfälle geeignet wird.

Das Konzept der übergeordneten, gruppenweise Folgeleitachse wird praktisch für alle vorliegenden Anwendungsfälle anwendbar, wenn eine manuelle und/oder nach Maßgabe eines Reglers gebildete Feinabstimmung der Umsetzungsfunktion vorgesehen ist. Auch diese Feinabstimmung ist dann im erfindungsgemäßen Sinne übergeordnet für alle Achsen der Gruppe. Somit ist die genannte Feinabstimmung global, es kann aber alternativ oder zusätzlich eine weitere Feinabstimmung der Umsetzungsfunktion bezüglich jeder einzelnen Achse einer Gruppe vorgesehen sein. Dann können durch die Vereinheitlichung der Folgeleitachse bedingte Abweichungen der Antriebe untereinander durch die Feinabstimmung an jedem Antrieb, d.h. an jeder Achse einzeln kompensiert werden. Dadurch wird eine unter praktisch allen auftretenden Umständen jederzeit zu gewährleistende Synchronität erhalten.

Für die Feinabstimmung nach Maßgabe eines Reglers können beispielsweise Wicklerregler, Tänzerregler, Zug- (Spannungs-) regler oder auch Registerregler bei Druckmaschinen vorgesehen sein.

Im oben genannten Sinne kann insbesondere ein zusätzlicher Positionsoffset vorgesehen sein, der lediglich auf ein, an den jeweiligen Antrieb der Achse einer Gruppe übertragenes, nach Maßgabe der Folgeleitachse generiertes Folgeleitachssignal einwirkt, so dass die betreffende Achse um diesen Positionsoffset gegenüber der Folgeleitachse versetzt ist. Auch dieser Positionsoffset ist praktisch wahlfrei - manuell z.B. durch Tippen, oder nach Maßgabe einer Regelung - vorbestimmbar.

Ein Anwendungsgebiet der Erfindung ist eine Registerregelung an Bearbeitungsmaschinen von Materialbahnen. Das Ausführungsbeispiel betrifft ein Verfahren zur Registerregelung an Bearbeitungsmaschinen von Materialbahnen nach dem Oberbegriff des Anspruchs 1. Eine solche Maschine hat Transport- und Bearbeitungsstationen beispielsweise mit angetriebenen, entsprechenden Walzen. In diesem Zusammenhang wird vorliegend der Einfachheit halber lediglich auf deren Achsen Bezug genommen.

Solche Verfahren werden beispielsweise bei Rotationsdruckmaschinen, Papierverarbeitungsmaschinen oder Bogendruckmaschinen angewendet, wenn eine bereits bearbeitete beziehungsweise bedruckte Papierbahn weiter bearbeitet beziehungsweise bedruckt werden soll (Insetting), sodass die nachfolgenden Bearbeitungsschritte an einer hinsichtlich eines beispielsweise auf der Papierbahn schon vorhandenen Aufdrucks präzise ausgerichteten Längsposition erfolgen muss. Dadurch wird gewährleistet, dass beispielsweise zwei nacheinander aufgebrachte Druckmotive sich in vorbestimmter Relativposition auf dem Papier decken. Um dies zu erreichen, werden zusammenwirkende Transport- und Bearbeitungsachsen relativ zueinander mittels Registerregelung korrigiert.

Bei Bearbeitungsmaschinen von Materialbahnen hat sich mittlerweile weitgehend das Prinzip durchgesetzt, die Achsen einer Bearbeitungsmaschine oder eines Maschinenteils mit untereinander synchronisierten Einzelantrieben auszustatten und dadurch etwa eine mechanische Königswelle zu ersetzen (siehe hierzu z.B. Dokumentation SYNAX 6, 2000, der Rexroth lndramat GmbH). Hierzu folgen die betreffenden Achsen (durch.die Synchronisation der zugehörigen Antriebe / über übergeordnete Steuerungen) einer übergeordneten, zeitlichen Leitachsfunktion und werden dadurch synchronisiert. Folgen bedeutet in einem solchen Zusammenhang, dass die Bewegung an der entsprechenden Achse unmittelbar oder über eine (elektronische) Umsetzung von der Leitachsfunktion abgeleitet wird. Die Leitachsfunktion korrespondiert mit einer Momentanposition einer z.B. virtuellen, d.h. elektronisch generierten oder realen Leitachse. Sie kann beispielsweise den zeitlichen Verlauf der Momentanposition, d.h. die Winkelstellung der Leitachse wiedergeben; sie kann aber auch den zeitlichen Verlauf der Umdrehungsgeschwindigkeit oder anderer, mit der Momentanposition der Leitachse korrespondierender Parameter beinhalten. Insbesondere ist sie eine elektronische, zeitliche Sollwertfolge.

Zusätzlich werden mehrere, registerfolgende Achsen gegenüber der Leitachsfunktion nach Maßgabe einer Abtastung von Registermarken der Materialbahnen korrigiert. Sie werden hinsichtlich ihrer Momentanposition, ihrer momentanen Umdrehungsgeschwindigkeit oder entsprechenden Parametern korrigiert. Das Maß der Korrektur wird durch die Abtastung von Registermarken gegeben. Die Registermarken können - wie im Stand der Technik üblich - beispielsweise aufgedruckt sein und optisch abgetastet werden.

Es ist bekannt, jede zu korrigierende Achse mit einem eigenen Registerregler zu regeln. Daraus ergibt sich die Notwendigkeit, jede Achse und deren Regler einzeln zu parametrieren und hinsichtlich der Korrekturbewegungen und der Synchronität mit den anderen Achsen zu optimieren. Der Aufwand bei der Inbetriebnahme ist demzufolge hoch; die Bereitstellung einer dementsprechend großen Anzahl von einzelnen Registerreglern ist zusätzlich mit hohem, apparativen Aufwand verbunden und führt zu hohen Kosten. Trotzdem ist die Synchronität der zu korrigierenden Achsen nicht immer befriedigend, da naturgemäß mechanisch und elektronisch bedingte Abweichungen zwischen den einzelnen Registerreglern auftreten können. Dies kann zu Bahnspannungsschwankungen führen.

Des Weiteren ist bekannt, einen Registerregler auf mehrere Achsen gleichzeitig einwirken zulassen. Dazu wird an jede Achse - d.h. an den entsprechenden Antrieb / an die entsprechende Steuerung des entsprechenden Elements, z.B. der Walze - ein individuelles Korrektursignal übertragen und dort in die entsprechende, individuelle Korrekturbewegung umgesetzt. Der Aufwand dafür steigt mit der Zahl der zu regelnden Achsen stark an, so dass dieses Verfahren für eine große Anzahl von zu regelnden. Achsen - wie allgemein üblich - nicht oder nur eingeschränkt anwendbar ist. Auch hierbei können Synchronitätsprobleme infolge von zu großen Zykluszeiten bei der Übertragung des Korrektursignals auftreten.

Es ist Aufgabe der vorliegenden Erfindung, ein Verfahren der eingangs genannten Art anzugeben, das - insbesondere bei einer großen Anzahl von zu regelnden Achsen - ein höheres Maß an Synchronität der zu korrigierenden Achsen gewährleistet und gleichzeitig eine einfache Inbetriebnahme bei vergleichsweise geringem, apparativen Aufwand erlaubt.

Diese Aufgabe wird gelöst durch die Merkmale des Anspruchs 1.

Die Erfindung bietet den Vorteil, dass mit nur einem Registerregler eine beliebige Anzahl von Achsen synchron geregelt werden kann. Dadurch ist der apparative Aufwand verringert und die Inbetriebnahme wesentlich erleichtert. Ein erfindungsgemäßes Verfahren zur Registerregelung führt unter Wahrung dieser Vorteile automatisch zu einem Höchstmaß an Synchronität der Korrekturbewegungen.

Diese Vorteile werden dadurch erreicht, dass aus einer gemeinsamen Abtastung eine für mehrere zu korrigierende Achsen gemeinsame, insbesondere zeitliche Korrekturfunktion abgeleitet wird. Dieser Korrekturfunktion folgen alle Achsen einer Gruppe von registerfolgenden Achsen, die sich hinsichtlich der Registerkorrektur entsprechen. Demzufolge ist die gesamte Information aller Korrekturbewegungen in der einheitlichen Korrekturfunktion bezüglich aller Achsen der Gruppe enthalten. Eine Gruppe von registerfolgenden Achsen, die sich entsprechen, umfasst lediglich Achsen, die mit einem gemeinsamen Registerregler zu regeln sind, für die also die gleiche Registerkorrektur und die gleiche Abtastung maßgeblich sind. Dies sind Achsen an einer zusammenhängenden/ununterbrochenen Materialbahn. Bei Rotationsdruckmaschinen können das einige oder alle Achsen eines Bearbeitungsturms, z.B. Druckturms sein oder auch Achsen von unterschiedlichen Bearbeitungstürmen, zwischen denen die Materialbahn nicht geschnitten / nicht unterbrochen wird.

Durch die Verwendung einer einheitlichen Korrekturfunktion, die nach Maßgabe lediglich eines Registerreglers berechnet wird und für alle Achsen der Gruppe einheitlich ist, kann gegenüber dem Stand der Technik eine Vielzahl von Registerreglern entfallen. Dabei wird trotzdem ein hohes Maß an Synchronität erreicht, so dass die Erfindung einen doppelten Nutzen aufweist.

Selbst bei Verwendung lediglich eines Registerreglers für eine Gruppe von Achsen - die auch eine Vielzahl von Achsen umfassen kann - ist automatisch ein hohes Maß an Synchronität gewährleistet, da lediglich eine Korrekturfunktion - und damit lediglich ein Korrektursignal - für alle Achsen der Gruppe verwendet werden kann. Daher ist auch lediglich ein Signal an die Achsen der Gruppe zu übertragen. Die einmal ermittelte Korrekturfunktion kann für alle Achsen praktisch gleichzeitig und einheitlich verwendet werden und bietet damit von selbst ein hohes Maß an Synchronität der Verstellbewegungen anhand der Korrektur, ohne dass dafür irgendwelche weiteren Vorkehrungen getroffen werden müssten.

Durch die Erfindung wird es des Weiteren erstmals möglich, eine Vielzahl von Achsen nach Maßgabe lediglich eines Registerreglers unter Wahrung eines Höchstmaßes an Synchronität zu verstellen. Die Verstellbewegungen sind für eine Vielzahl von Achsen lediglich mit einem Registerregler zu ermitteln und sind dann für alle diese Achsen verwendbar und können praktisch gleichzeitig an diese Achsen übermittelt werden.

Bevorzugte Ausgestaltungen der vorliegenden Erfindung sind in den Unteransprüchen beschrieben.

Die Korrekturbewegung kann direkt und somit schnell an den entsprechenden Achsen zur Verfügung gestellt werden, wenn die Korrekturfunktion im wesentlichen lediglich die Korrekturen gegenüber der Leitachsfunktion enthält und als solche zur Registerkorrektur verwendet wird. Aufgrund der praktisch unmittelbaren Verwendung des Korrektursignals ist dieses mit relativ geringer Rechenkapazität, insbesondere mit geringem Rechenaufwand zu ermitteln.

Wenn die Korrekturfunktion mit der Leitachsfunktion zu einer zusätzlichen, zeitlichen Registerfolge-Leitachsfunktion verknüpft wird, kann diese Verknüpfung zentral und einheitlich im Rahmen einer Registerregelung erfolgen und an die entsprechenden Achsen als Registerfolge-Leitachsfunktion übermittelt werden; einer solchen Registerfolge-Leitachsfunktion können die einzelnen Achsen dann praktisch direkt und unmittelbar folgen, ohne dass dezentrale Ableitungen - die mit einem erhöhten Rechenaufwand verbunden sind - an den einzelnen Achsen erfolgen müssen. Die Registerfolge-Leitachsfunktion enthält dann praktisch alle Daten für jede Achse in einem einheitlichen Signal. Da ohnehin die technischen Vorkehrungen für die Bereitstellung und Übertragung einer Leitachsfunktion generell getroffen sein müssen, ist dies eine für das erfindungsgemäße Verfahren naturgemäße Lösung, die ohne weiteres in die bestehenden Antriebstrukturen/Reglerstrukturen integriert werden kann. Es gibt dann zwei Leitachsfunktionen - nämlich die unveränderte und die Registerfolge-Leitachsfunktion - für die in der Regel die Rechen- und Übertragungskapazitäten bereits vorhanden sind.

Je nach der Art der erwarteten bzw. registrierten (d. h. im Rahmen der Registerregelung abgetasteten) Abweichungen (dasjenige Maß, um welches die Materialbahn " aus dem Register läuft", das ist das Maß der Abweichungen gegenüber der Vorgabe durch die Registermarken) ist die Art der Korrekturfunktion auszuwählen. Die Erfindung ist bereits für eine Vielzahl von Anwendungsfällen, in denen die Abweichung praktisch konstant ist, geeignet, wenn die Korrekturfunktion einen durch die Abtastung der Registermarken bestimmten Positionsoffset gegenüber der Momentanposition der Leitachse umfasst. Die Korrekturfunktion besteht dann im wesentlichen aus einem konstanten oder sich nach Maßgabe der Abtastung der Registermarken ändernden Positionsoffset. Eine Registerfolge-Leitachsfunktion hat in diesem Fall eine entsprechend entweder konstante oder sich-bevorzugt zeitlich vergleichsweise langsam ändernde - Abweichung von der Leitachse.

Zusätzlich oder alternativ kann vorgesehen sein, dass die Korrekturfunktion eine durch die Abtastung der Registermarken bestimmte, einer Getriebeübersetzung bezüglich der Leitachse entsprechende Funktion umfasst. Dies entspricht im Falle einer Korrekturfunktion, die lediglich die Korrekturbewegungen umfasst, einer reinen Getriebeübersetzung, die ebenfalls konstant sein kann oder sich nach Maßgabe der Abtastung zeitlich ändert. Im Falle des Anspruchs 4 entspricht dies einer Registerfolge-Leitachsfunktion, die mit einer Getriebeübersetzung von der (übergeordneten) Leitachsfunktion abgeleitet wird.

Durch die genannten Ausgestaltungen ist eine Vereinfachung, nämlich eine mögliche Beschränkung auf lediglich zwei Methoden der Ableitungen der Korrekturfunktion/der zeitlichen Registerfolge-Leitachsfunktion gegeben, durch die die Erfindung aber praktisch für alle auftretenden Anwendungsfälle geeignet wird.

Eventuell verbleibende Abweichungen zwischen Achsen einer Gruppe werden dadurch minimiert, dass die Abtastung praktisch in einem Zentralbereich - bezogen auf die Längsrichtung der Materialbahn - der registerfolgenden Achsen erfolgt. Die eventuell verbleibenden Abweichungen haben in der Regel - in Längsrichtung der Materialbahn gesehen - einen kontinuierlichen Verlauf, d. h. sie sind an der Abtaststelle bzw. am Sensorort praktisch gleich Null, da die Registerregelung auf diesen Sensor bezogen ist. In Längsrichtung gemessen sind sie in der Regel streng monoton und wechseln am Sensorort ihr Vorzeichen. In diesem Fall ist die genannte Abtaststelle der Ort, wo die Abtastung praktisch zum kleinstmöglichen Maximalbetrag der Einzelabweichungen an den Achsen der Gruppe und gleichzeitig auch zur kleinsten Summe der Beträge der Abweichungen der einzelnen Achsen vom entsprechenden Sollwert führt.

Insbesondere bei Insetting-Anwendungen an Rotationsdruckmaschinen wird vorgeschlagen, dass eine Gruppe vorgesehen ist, die lediglich Transportachsen umfaßt. Dann ist die Korrekturfunktion/die Registerfolge-Leitachsfunktion für alle Transportachsen der Gruppe maßgeblich, sodass diese erfindungsgemäß mit großer Synchronität korrigiert werden. Dies führt zu einer äußerst präzisen, gemeinsamen Korrektur der Transportachsen relativ zu den Bearbeitungsachsen.

Um eine erhöhte Genauigkeit der Bearbeitung bei einer erfindungsgemäßen Registerregelung zu erreichen, wird vorgeschlagen, dass zusätzlich eine vorbestimmte, hinsichtlich des Rechenaufwandes/der Rechenkapazität einfache Korrektur von Bearbeitungsachsen erfolgt, die hinsichtlich der Registerkorrektur der Gruppe der Transportachsen entsprechen. Dabei gilt die o.a. Definition der sich entsprechenden Achsen entsprechend. Durch diese Maßnahme wird ein zusätzlicher, einfach zu realisierender Freiheitsgrad in das Regelsystem eingeführt. Eine einfache Korrektur in diesem Sinne dürfte für die meisten Fälle ausreichend sein, um eventuell noch auftretende Abweichungen auszugleichen. Gerade im Falle einer Registerregelung sind die Anforderungen an die Koinzidenz der Bearbeitung mit den durch die Registermarken vorgegebenen Positionen sehr hoch. Die genannte Ausgestaltung erlaubt es auf einfache Weise, diese Koinzidenz noch weiter zu verbessern. Dabei können Abweichungen eliminiert werden, die praktisch für eine Vielzahl von Bearbeitungsachsen gleich sind; es können aber auch Abweichungen eliminiert werden, die für unterschiedliche Bearbeitungsachsen unterschiedlich sein können. Letzteres betrifft insbesondere eine eventuell noch verbleibende Abweichung, die durch den Abstand einer Bearbeitungsachse von dem Sensorort entstehen kann (entsprechend dem oben hierzu ausgeführten).

Eine einfache und effektive Korrektur im obigen Sinne kann dadurch erreicht werden, dass der Längsfehler pro Längeneinheit der Materialbahn und für jede zu korrigierende Bearbeitungsachse deren Längsabstand zu der Abtaststelle ermittelt und die Korrektur der betreffenden Bearbeitungsachse im wesentlichen durch das Produkt aus Längsfehler und Längsabstand gebildet wird. Da in der Regel die Materialbahn nach der Bearbeitung in einzelne Produkte geteilt wird, wird vorgeschlagen, dass die Materialbahn in einzelne Produkte vorbestimmter Produktlänge unterteilt wird, wobei der Längsfehler je Produktlänge ermittelt und die Korrektur der betreffenden Bearbeitungsachse im wesentlichen durch das Produkt aus Längsfehler je Produktlänge und Quotient: Längsabstand/Produktlänge gebildet wird. Dieses Verfahren ist hinsichtlich der erforderlichen Rechenleistung/Rechenkapazität vereinfacht. Es führt naturgemäß in der Regel auch zu einer besseren Koinzidenz (s. o.), da die Abweichung auf die Produktlänge bezogen wird. Die Produktlänge ist ohnehin die für die Bearbeitungsachsen maßgebliche Größe, sodass die Berechnung und Umsetzung der entsprechenden Korrektur einfach und präzise erfolgen kann.

Die oben genannte, zusätzliche Korrektur kann dadurch realisiert werden, dass mehrere, zu korrigierende Bearbeitungsachsen eine Gruppe gemäß Anspruch 1 bilden. Dadurch ist die Anzahl der erforderlichen Korrekturrechnungen verringert - in der Regel um die Anzahl der Achsen, die zu einer Gruppe bzw. zu Gruppen zusammengefasst werden vermindert um die Anzahl solcher Gruppen. Durch diese Zusammenfassung zu einer Gruppe mit entsprechenden Korrekturen wird eine zentrale Struktur mit allen Vorteilen der Erfindung geschaffen; diese zentrale Struktur kann bzgl. anderer Gruppen untergeordnet sein. Dann können Bearbeitungsachsen in mehrere Gruppen aufgeteilt werden. Wesentlich ist, dass die Abweichung innerhalb einer Gruppe vergleichsweise klein bleibt.

Die möglichen Kapazitäten des Verfahrens werden vollständig ausgenutzt, wenn zumindest eine registerunabhängige Achse vorgesehen ist, die der zeitlichen Leitachsfunktion folgt. Dann sind zwei oder mehr Leitachsfunktionen vorgesehen, die in das System integriert sind und von jeweils zugehörigen Achsen verwendet werden, d. h., dass die zugehörigen Achsen der jeweiligen Leitachsfunktion (bzw. Registerfolge-Leitachsfunktion) folgen.

Die Erfindung wird anhand von in den Figuren dargestellten Ausführungsbeispielen näher erläutert. Es zeigen:
Figur 1 schematisch eine Leitachskaskadierung im Sinne der Erfindung,
Figur 2 eine schematische Darstellung einer Leitachsstruktur für die Ausführung des erfindungsgegenständlichen Verfahrens,
Figur 3 eine Materialbearbeitungsmaschine mit einer Leitachskaskadierung gemäß der Erfindung,
Figur 4a eine Schemaskizze einer Registerreglerstruktur an einer Druckmaschine,
Figur 4b einen Detailausschnitt der Figur 4a,
Figur 5 ein Diagramm einer Leitachsfunktion und einer Folgeleitachsfunktion.

Sofern im folgenden nichts anderes gesagt ist, beziehen sich alle Bezugszeichen stets auf alle Figuren.

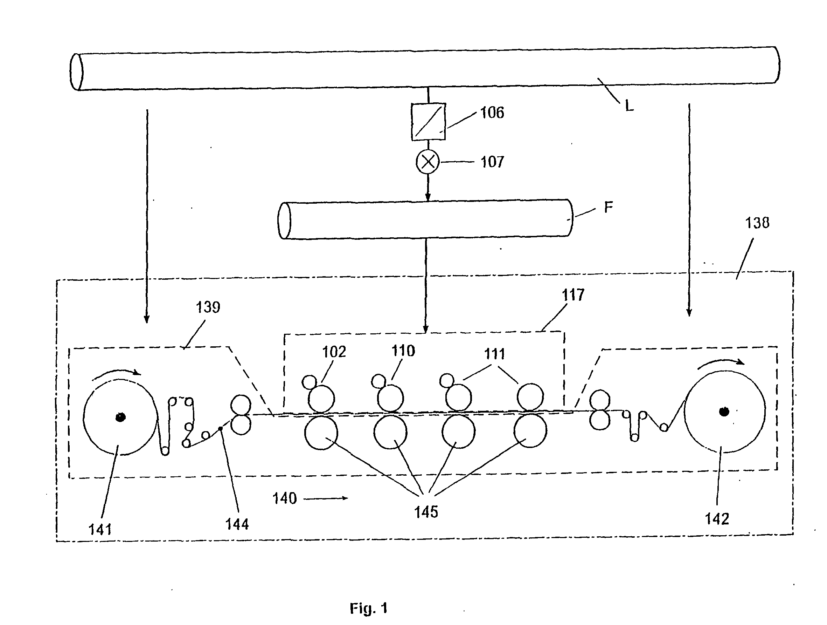

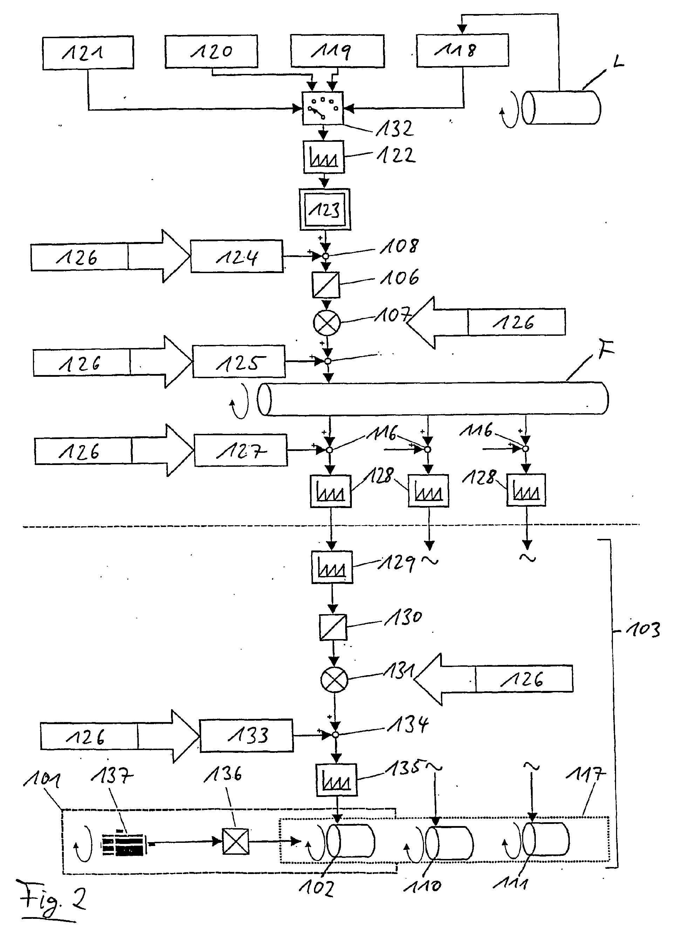

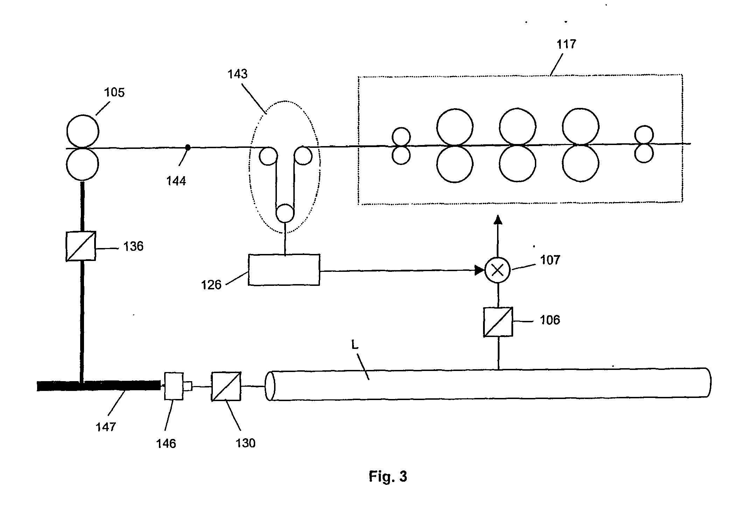

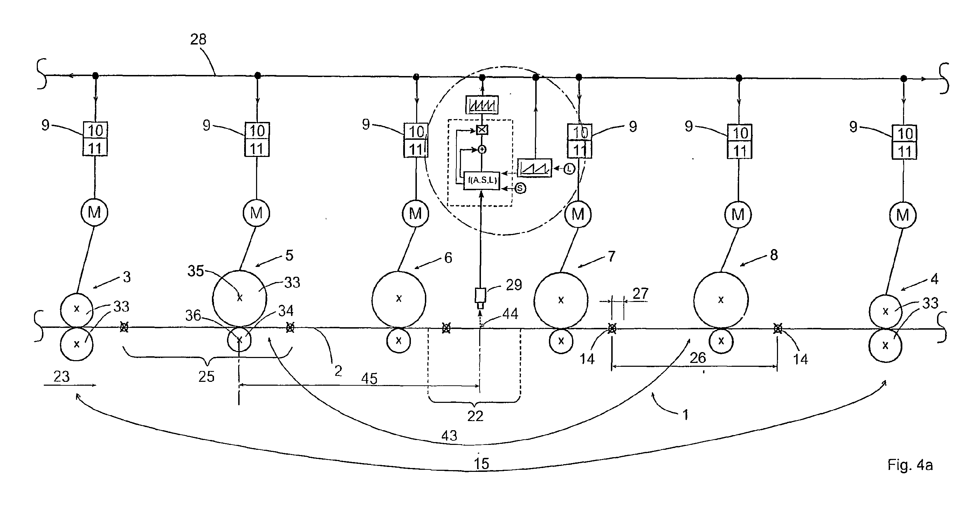

Figur 1 zeigt schematisch das Prinzip der Leitachskaskadierung gemäß der vorliegenden Erfindung an einer Maschine 138. Von der übergeordneten Leitachse L wird über eine Getriebefunktion 106 mit einem Feingetriebemodul 107 eine Folgeleitachse F abgeleitet. Diese Folgeleitachse wirkt auf die Gruppe 117 von Achsen 102, 110, 111 ein. Dies sind im gezeigten Beispiel die Bearbeitungsachsen in einer Bearbeitungsmaschine für eine Materialbahn 144. Die Materialbahn 144 wird durch Transportachsen 145 gefördert. Zusätzlich sind noch ein Abzugwickel 141 und ein Aufrollwickel 142 vorgesehen. Die Transportachsen 145, die Achsen der Antriebe für den Abziehwickel 141 und den Aufrollwickel 142 werden direkt und unmittelbar von der Leitachse L - ggf. mit dazwischengeschalteten Einzelableitungen, d.h. entsprechenden mechanischen Umsetzungsfunktion - abgeleitet. In Förderrichtung 140 gesehen ist der Bearbeitungsstation nachgeschaltet eine Zugspannungsverstellung/ein Bahnspeicher 143. Damit könnte beispielsweise ein Tänzerregler verbunden sein. Das Getriebemodul 106 bzw. das Feingetriebemodul 107 wird nach Maßgabe des Produktformats parametriert. Dadurch kann bei einem Wechsel des Produktformats einfach durch eine entsprechende Parametrierung der maßgebliche Maschinenteil als Ganzes synchronisiert werden, so dass die Achsbewegung mit dem jeweiligen Produktformat korrespondiert.
Detailliert ist ein verallgemeinertes Ausführungsbeispiel der vorliegenden Erfindung in Figur 2 beschrieben:
Diese zeigt schematisch einen Teil der Reglerstruktur/Sollwertzyklusbildung mit dem erfindungsgegenständlichen.Verfahren. Die gezeigte Struktur ist Teil einer Maschine 138 mit mehreren Achsen 102,110,111. In der vorliegenden Beschreibung wird unter diesen Achsen der zugehörige Verbund/die zugehörige Station bestehend aus Antrieb (Antriebsregler, Motor, Getriebe) und den entsprechenden Walzen oder anderen
Drehkörpern bzw. mit dem Antrieb angetriebenen Maschinenelementen verstanden. Dies sind einzelne Elemente der Maschine, die mit der Erfindung untereinander synchronisiert angetrieben werden. Im folgenden wird daher lediglich auf deren Achsen Bezug genommen. In der Beschreibung sind die Leitachsen L (Leitachse) und F (Folgeleitachse) hiervon zu unterscheiden. Es handelt sich dabei um (reale oder virtuelle) Leitachsfolgen; dies sind die (meist diskreten) zeitlichen Verläufe von Momentanpositionen der betreffenden Leitachsen bzw. von mit den entsprechenden Momentanpositionen korrespondierenden Parametern.

Die (Einzel-) Achsen 102, 110,111 werden folgendermaßen nach Maßgabe der elektronischen, zeitlichen Leitachsfunktion synchronisiert angetrieben: Die Leitachse L (das ist die entsprechende Sollwertfolge) gibt den Takt zur Erzeugung der Leitachsfunktion vor. Die Leitachse L kann auch praktisch unmittelbar auf nachgeordnete Maschinenachsen 139 einwirken. Diese folgt dann direkt oder über eine zugehörige, beispielsweise einzelne mechanische Umsetzung der Leitachse L.

Der in Figur 1 dargestellte Zweig der Reglerhierarchie ist komplett von der Leitachse L abgeleitet und in vorbestimmter Weise mit der Leitachse L synchronisiert. Hierzu wird die Leitachsfunktion in eine der Leitachse L nachgeordnete Leitachse 118 umgewandelt, nach deren Maßgabe der Leitachszyklus 122 erzeugt wird. Alternativ kann der Leitachszyklus 122 auch durch eine reale Leitachse 119 (beispielsweise aus dem Gebersignal einer Welle einer vorgeordneten Maschine oder eines Maschinenteils, mit dem die gezeigte Reglerhierarchie synchronisiert werden soll), einer rein virtuellen Leitachse 120 (dies ist z.B. eine elektronisch generierte Sollwertfolge) oder einem Positioniermodul 121 folgen. Zwischen diesen Alternativen kann - hier schematisch gezeigt - mittels eines Umschalters 132 der Eingangsfunktion je nach Bedarf umgeschaltet werden.

Der Leitachszyklus 122 wird in einem Synchronisationsmodul 123 verarbeitet, wo eine Adaption des Leitachszyklus 122 bezüglich des der Reglerstruktur entsprechenden Maschinenteils erfolgt.

Es sind in der Maschine 138 / dem Maschinenteil mehrere abgeleitete Achsen 102, 110, 111 vorhanden, die - je nach den aktuellen Produktionsanforderungen im Rahmen der vorliegenden Maschine 138 - nach Maßgabe von solchermaßen vorbestimmten Umsetzungsfunktionen von der Leitachse L abgeleitet werden. Die Umsetzungsfunktionen entsprechen dabei den Umsetzungen 106, 107, 108, 109; hierauf wird später noch näher eingegangen. Die abgeleiteten Achsen 102, 110, 111 entsprechen sich in oben genanntem Sinne hinsichtlich der erforderlichen mechanischen Umsetzung gegenüber der Leitachse L. Davon ist auch umfasst, dass die Achsen 102, 110, 111 der Gruppe 117 sich lediglich teilweise entsprechen. Vorzugsweise haben die genannten Achsen aber die gleichen Umsetzungen von der Leitachse L bis auf wenige Ausnahmen bzw. geringfügige Abweichungen. Diese können dann gegenüber den Achsen 102, 110, 111 der Gruppe 117 noch über eine separate, individuelle Umsetzung von der erfindungsgemäßen übergeordneten Umsetzung weiter abgeleitet werden. Hierauf wird später noch näher eingegangen.

Alle Achsen 102,110,111 dieser Gruppe 117 folgen einem über eine mechanische Umsetzung 106, 107, 108, 109 von der Leitachse L oder von einem der Geber 119, 120, 121 abgegebenen Leitachssignal. Damit ist die mechanische Umsetzung 106, 107, 108, 109 der Leitachse L nachgeordnet und wird über die genannten Umsetzungen 106, 107, 108, 109 von dieser abgeleitet und ist bezüglich aller Achsen 102, 110, 111 der Gruppe 117 einheitlich und übergeordnet.

Es ist eine nach Vorgabe durch die Produktionsanfordemng/Maschinenanfordämngen gegebene Folge von mechanischen Umsetzungen 106, 107, 108, 109 vorgesehen, die bei der Konfiguration der Reglerstruktur vorbestimmbar sind und einzeln wahlfrei zuoder abgeschaltet werden können. Die mechanischen Umsetzungen 106, 107, 108, 109 werden von einem Reglermodul 126 parametriert. Zunächst ist eine vorgeschaltete Offsetaddition 108 (Lageroffset, Vordifferenzial) vorgesehen. Der zugehörige Regler 126 kann der Regelstrecke eines Registerreglers, eines Zugreglers oder eines Tänzerreglers an der entsprechenden Maschine 138 / dem entsprechenden Maschinenteil entsprechen. Er kann beispielsweise im Rahmen eines PC's, insbesondere eines Power-PC's, realisiert sein. Bei der Offsetaddition wird zu dem synchronisierten Leitachszyklus 122 ein fester oder variabler Positionsoffset addiert. Im gezeigten Ausführungsbeispiel ist dieser Positionsoffset als Vordifferenzial ausgebildet, d.h. er bezieht sich auf den Leitachszyklus 122. Nachgeschaltet ist ein weiterer Positionsoffset 109 vorgesehen, der sich nach Art eines Nachdifferenzials auf die Momentanposition (oder damit korrespondierende Parameter) einer Folgeleitachse F bezieht. Zwischen den beiden Offsetadditionen 108, 109 sind ein Getriebemodul 106 und ein Feingetriebemodul 107 vorgesehen. Dies sind rein elektronische Umsetzungen des Leitachszyklus 122. Auch die Parametrierung der Getriebemodule 106, 107 erfolgt über einen Regler 126 oder durch manuelles Tippen (dies bezieht sich insbesondere auf die Parametrierung des Feingetriebemoduls 107).

Durch die mechanischen Umsetzungen 106, 107, 108, 109 wird insgesamt eine (elektronische) zeitliche Folgeleitachsfunktion erzeugt, die der Bewegung einer Folgeleitachse F entspricht. Diese Folgeleitachse F enthält die gesamte mechanische Umsetzung 106, 107, 108, 109 in Form eines Folgeleitachssignals. Hierin besteht ein wesentlicher Vorteil des erfindungsgemäßen Verfahrens. Die Folgeleitachse F wirkt auf alle Achsen 102, 110, 111 der Gruppe 117 übergeordnet ein, so dass bezüglich der Anzahl der zu der Gruppe 117 zusammengefassten Achsen 102, 110, 111 die gemeinsame mechanische Umsetzung 106, 107, 108, 109 bereits erfolgt ist und nicht etwa für jede der Achsen 102, 110, 111 separat erfolgen muss. Hierdurch wird der apparative und regelürigstechnische Aufwand drastisch reduziert, nämlich im wesentlichen um die Zahl der zu einer Gruppe 117 zusammengefassten Achsen vermindert um die Anzahl der Gruppen.

Im gezeigten Ausfiihrungsbeispiel ist die Anzahl der gezeigten Achsen 102, 110, 111 lediglich gleich drei; bei einer Maschine zur Anwendung des erfindungsgegenständlichen Verfahrens wird die Anzahl der zu einer Gruppe 117 zusammengefassten Achsen 102, 110, 111 in der Regel wesentlich höher sein. Sie liegt in der Regel zwischen 5 und 60. Daraus wird ersichtlich, dass das Verfahren zu einer drastischen Vereinfachung und Reduzierung des Regelungsaufwandes und des apparativen Aufwandes führt. Die Erfindung hat aber einen weiteren Nutzen: im Vergleich zur Anzahl der abzuleitenden Achsen im Stand der Technik ist die Anzahl der Achsen einer Gruppe verringert. Werden beispielsweise 50 Achsen zu fünf Gruppen zu zehn Achsen zusammengefasst, so beträgt die Anzahl der Achsen, die dem Aktualisierungszyklus der jeweiligen Folgeleitachse F folgen, lediglich 10. Dadurch werden wesentlich geringere Zykluszeiten realisiert, die sich im Beispiel mit einem Faktor 5 auf die Zykluszeiten der Achsen auswirken. Zur Aktualisierung der Einzelachsen müssen nicht mehr 50 Weitergabezyklen durchlaufen werden, sondern lediglich zehn in jeder Gruppe, die unter den Gruppen in der Regel nicht sequenziell, sondern gleichzeitig ablaufen können. Dadurch beträgt die benötigte Zeit für einen Aktualisierungszyklus im genannten Beispiel lediglich ein Fünftel, bezogen auf den Stand der Technik.

Vor der Ableitung der Folgeleitachszyklen 128 für jede der Achsen 102, 110, 111 ist jeweils eine zusätzliche Offsetaddition 116 vorgesehen, der für jede der Achsen 102, 110, 111 einen individuellen Offset addieren kann. Dieser wird - wie oben beschrieben - durch ein Reglermodul 126 vorgegeben und über einen zusätzliche Offsetgeber 127 auf die entsprechenden Signale addiert.

Die weitere Reglerstruktur der Achsen 110,111 ist der Einfachheit halber weggelassen. Sie wird im folgenden beispielhaft anhand der betreffenden Struktur lediglich der Achse 102 beschrieben. Der Leitachszyklus 129 wird ggf. nochmalig einem Antriebsgetriebemodul 130 und einem Antriebs-Feingetriebemodul 131 zur Feineinstellung und Korrektur gegenüber der Folgeleitachse F unterworfen. Ein zusätzlicher Antriebs-Offsetaddierer, der von einem Antriebs-Offsetgeber 133 nach Maßgabe eines Reglers 126 beaufschlagt ist, dient zur Aufprägung eines individuellen Offsets auf Antriebsreglerebene.

Der schließlich aus den genannten Werten erzeugte Sollwertzyklus 135 wirkt auf die Achse 102, d.h. auf den Antriebsregler, den Motor 137 und ein eventuell vorgeschaltetes, mechanisches Getriebe 136 ein. Dadurch ist die entsprechende Achse 102 einerseits mit der Leitachse L synchronisiert, folgt aber der Folgeleitachse F, die wiederum mit der Leitachse L synchronisiert ist. Insgesamt wird dadurch jeder der Achsen 102, 110, 111 eine synchronisierte Bewegung unter Wahrung der Synchronität aufgeprägt. Dabei bleiben jedoch die Einzel-Freiheitsgrade der Achsen 102, 110, 111 durch die vorgesehene Regelung auf Antriebsebene 103 erhalten, so dass durchaus noch Einzelkorrekturen der jeweiligen Einzelachsen 102, 110, 111 vorgenommen werden können.

Fig. 3 zeigt ein weiteres Ausführungsbeispiel, bei dem eine reale Leitachse L von einer Maschinenwelle 147 abgeleitet wird. Hierzu wird die Maschinenwelle 147 abgetastet und ein Geber 146 liefert z.B. Positionsdaten, aus denen über Getriebemodul 130 die eigentliche (reale) Leitachse L erzeugt wird. So wird der gezeigte Maschinenteil an eine vorgeschaltete Maschine synchronisiert angekoppelt, in der eine Materialbahn 144, z.B. mit der Maschinenachse 105, die über ein mechanisches Getriebe von der Maschinenwelle 147 abgeleitet ist, bearbeitet wird. Um beispielsweise Bahnspannungsschwankungen auszugleichen, die durch die Auskopplung entstehen können, ist eine Zugspannungsverstellung 143 vorgesehen (beispielsweise mit einem Zugspannungsregler). Ein zugehöriges Reglermodul 126 parametriert dabei ein Feingetriebemodul 107 (oder eine Offsetaddition), über welches die Bewegung der Gruppe 117 von Achsen der nachgeschalteten Maschine (zusammen mit dem Getriebemodul 106) gruppenweise von der Leitachse L abgeleitet wird.

Fig. 4a zeigt - schematisch vereinfachend - eine Bearbeitungsmaschine 1 zur Bearbeitung einer Materialbahn 2. Es handelt sich um eine Rotationsdruckmaschine, bestehend aus mehreren angetriebenen Walzen 33 mit jeweils zugehörigen Andruckwalzen 34.

Die Bearbeitungsmaschine 1 hat eine Eingangs-Transportstation, die im wesentlichen durch die Transportachse 3 mit ihren beiden Walzen 33 gebildet wird. Am anderen Ende (in Längsrichtung 23 gesehen) befindet sich eine Ausgangs-Transportachse 4, bestehend aus ebenfalls zwei zusammenwirkenden Walzen 33. Zwischen den Transportachsen 3,4 befinden sich vier Bearbeitungsstationen 5,6,7,8, im Folgenden der Einfachheit halber lediglich als Bearbeitungsachsen 5,6,7,8 bezeichnet.

Der Begriff der Achse wird hier gebraucht für die entsprechende Station mit den zugehörigen Walzen 33, deren Motoren M und dem dazugehörigen Antrieb 9. Der Begriff der Achse ist insbesondere zu unterscheiden von der physikalischen Drehachse 35, 36 der jeweiligen Walzen 33,34.

Die gezeigten Transportachsen 3,4 und die damit zusammenwirkenden Bearbeitungsachsen 5,6,7,8 sind jeweils durch einen zugehörigen Einzelantrieb 9 angetrieben. Dadurch wird eine durchgehende, mechanische Welle (Königswelle) ersetzt. Hierzu ist es erforderlich, dass die Einzelantriebe 9 untereinander synchronisiert werden. Zu diesem Zweck bekommen die Einzelantriebe 9 Leitachssignaldaten zugeleitet (s.u.) über einen Datenbus 28. Zur Synchronisation folgen die Achsen 5,6,7,8 einer zeitlichen Leitachsfunktion 12, die in den Datenbus 28 eingespeist und über diesen an die Einzelantriebe 9 übertragen wird. Abweichungen werden durch die Registerregelung dadurch kompensiert, dass zunächst Registermarken 14 (hier symbolisiert durch Kreuze an den entsprechenden Längspositionen) von einem (optischen) Sensor 29 abgetastet werden. Aus der Abtastung wird dann eine Korrektur gegenüber der Leitachsfunktion 12 in dem Registerregler 30 berechnet, welche zunächst lediglich auf die registerfolgenden Achsen 3,4 wirkt. Zunächst einmal ist keine Registerkorrektur der übrigen Bearbeitungsachsen 5,6,7,8 vorgesehen (diese kann aber zusätzlich erfolgen, s.u.), sodass die Registerkorrektur einer Relativkorrektur zwischen den Transportachsen 3,4 und den Bearbeitungsachsen 5,6,7,8 entspricht.

Die (von der Registerkorrektur unbeeinflusste) Leitachse L ist hier lediglich durch einen Kreis symbolisiert. Es ist für die Erfindung unerheblich, ob es sich hierbei um eine virtuelle Leitachse, deren Momentanposition auf rein elektronischem Wege erzeugt wird, oder um eine so genannte reelle Leitachse handelt, deren Momentanposition durch die Abtastung einer tatsächlich physikalisch vorhandenen mechanischen Welle oder durch ein Feedback eines Antriebs gegeben ist.

Erfindungsgemäß wird eine Gruppe 15 aus den registerfolgenden Transportachsen 3,4 gebildet, die sich hinsichtlich der Registerkorrektur entsprechen, wie oben näher erläutert. Für diese Gruppe 15 von registerfolgenden Achsen 3,4 erfolgt lediglich eine gemeinsame Abtastung. Diese erfolgt an lediglich einer Abtaststelle 44 durch den Sensor 29, der beispielsweise eine Photodiode oder eine CCD-Kamera sein kann mit einer nachgeschalteten Auswerteelektronik zur Erkennung der Registermarken.

Aus der gemeinsamen Abtastung wird eine ebenfalls bzgl. der Gruppe 15 der registerfolgenden Achsen 3,4 gemeinsame Korrekturfunktion 16 abgeleitet. Diese kann daraus gebildet werden, dass aus einem Soll-Ist-Vergleich nach Maßgabe der Abtastung der Registermarken die örtliche Abweichung, deren Ableitung (das ist die Geschwindigkeit) oder damit korrespondierende Funktionen gebildet werden. Die Korrekturfunktion wird im gezeigten Ausführungsbeispiel durch den Vergleich des Abtastergebnisses mit dem Sollwert S und/oder der Leitachsfunktion 12 gebildet, der dazu - zusammen mit dem Abtastsignal von dem Sensor 29 - in ein Rechenglied 31 eingespeist wird. Der Sollwert S enthält die Information, an welcher Relativposition bezüglich der Leitachsfunktion 12 und/oder der Bearbeitungsachsen 5,6,7,8 auf der Materialbahn sich die Registermarken an der Abtaststelle 44 befinden sollen.

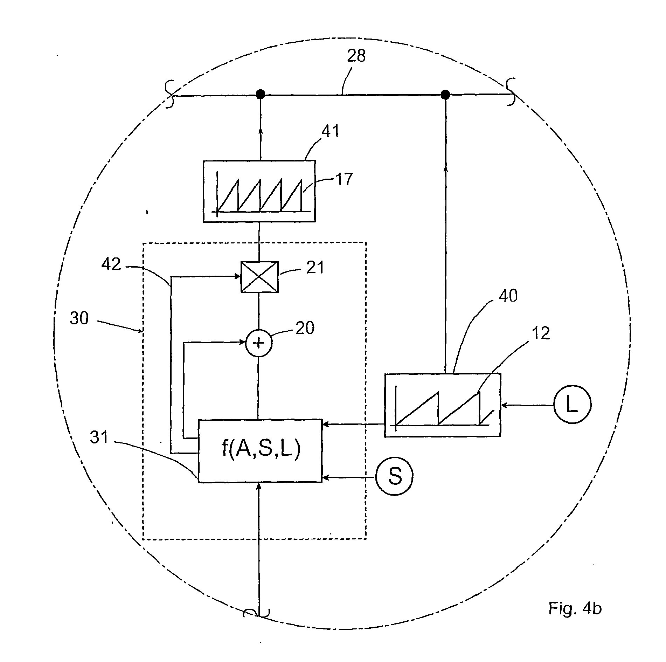

Aus der in dem Rechenglied 31 (siehe Fig. 4b) gebildeten Regelabweichung (entsprechend der Korrekturfunktion 16) wird eine Registerfolge-Leitachsfunktion 17 abgeleitet. Diese ist zur Verdeutlichung schematisch dargestellt mit übertrieben stark von der Steigung der Leitachsfunktion 12 abweichender Steigung. Die Leitachsfunktion 12 wird in den Registerregler 30 eingespeist. Die Verknüpfung der Korrekturfunktion 16 mit der Leitachsfunktion 12 erfolgt ebenfalls in dem erfindungsgemäßen Registerregler 30. Da es sich bei der Kommunikationsleitung um einen Datenbus 28 handelt, kann an allen Einzelantrieben 9 sowohl die (unveränderte) Leitachsfunktion 12 als auch die aus der Korrekturfunktion 16 gebildete Registerfolge-Leitachsfunktion 17 bereitgestellt werden, wobei der jeweilige Antrieb 9 lediglich nach Maßgabe einer veränderbaren Einstellung von der vorbestimmten, entsprechenden Leitachsfunktion 12 / Registerfolge-Leitachsfunktion 17 angesteuert bzw. angesprochen/adressiert wird. Damit ist die Wahlfreiheit gewährleistet, dass praktisch jede Achse 3,4,5,6,7,8 nach Maßgabe der (Vor-)Einstellung einer beliebigen der vorgesehenen Leitachsfunktionen 12,17 oder der Korrekturfunktion 16 nach Verarbeitung/Anpassung - beispielsweise in dem betreffenden Antriebsregler 10 -folgen kann.

Die jeweilige Leitachsfunktion 12,17 oder die Korrekturfunktion 16 wird daraufhin in dem Antriebsregler 10 verarbeitet und der jeweilige Motor M nach dessen Maßgabe entsprechend synchronisiert/korrigiert über die Leistungselektronik 11 angetrieben.

Die Funktionsweise einer erfindungsgemäßen Registerregelung ist in der Ausschnittvergrößerung in Fig. 4b schematisch dargestellt:

Generell ist zur Synchronisation der vorhandenen Achsen eine Leitachsfunktion 12 vorgesehen, welche über den Datenbus 28 an jeden der Einzelantriebe 9 einzeln übertragen/adressiert werden kann und den jeweiligen Antrieb 9 übergeordnet synchronisiert. Auf der linken Seite der Ausschnittvergrößerung ist der Registerregler 30 im Detail gezeigt. Dort wird aus dem Sollwert S und dem Abtastsignal A die Korrekturfunktion 16 gebildet und nach Maßgabe der Korrektur mit der übergeordneten Leitachsfunktion 12 zu einer Registerfolge-Leitachsfunktion 17 verarbeitet. Aus der Detailansicht ist zu entnehmen, dass im Einzelnen zunächst aus Sollwert S, Leitachsfunktion 12 bzw. Leitachse L und einem Abtastsignal A in dem Rechenglied 31 eine Funktion f (A,S,L) berechnet wird. Dies könnte die Korrekturfunktion 16 sein. Im vorliegenden Fall ist es eine (vorzugsweise momentane/akfixalisierte) Vorgabe, nach Maßgabe derer über die Parameterleitung 42 aus der Leitachsfunktion 12 die Registerfolge-Leitachsfunktion 17 abgeleitet wird. Wie in der Detailansicht gezeigt, sind/ist für die Ableitung der Registerfolge-Leitachsfunktion 17 lediglich ein Offset-Addierer 20 und/oder ein Getriebeglied 21 vorgesehen, die von dem Rechenglied 31 über die Parameterleitungen 42 angesprochen werden/wird. Dies bedeutet, dass nach Maßgabe der Abtastung entweder ein reiner Positionsoffset 19 oder eine Getriebeableitung oder beides zur Ableitung der Registerfolge-Leitachsfunktion 17 verwendet wird. Für die Bildung der Korrekturfunktion 16 / der registerfolgenden Leitachsfunktion 17 wird aus dem Abtastergebnis, dem Sollwert (diese kann auch eine zeitliche Sollwertfunktion sein) und der Leitachsfunktion 12 das Maß des Positionsoffsets 19 und/oder die Getriebeübersetzung für das Getriebeglied 21 berechnet und vorzugsweise im Rahmen der beteiligten Taktrate und der erwarteten Zeitkonstante für das Reglersystem aktualisiert. Über die Parameterleitung 42 werden somit die zur Bildung dieser Funktion erforderlichen Parameter an die Glieder 20,21 geleitet.

Falls keine Regelabweichung vorhanden oder keine Regelung erwünscht ist, können auch alle Parameter derart bemessen sein oder vorgegeben werden, dass die Glieder 20 und/oder 21 indifferent sind und die Registerfolge-Leitachsfunktion 17 im wesentlichen gleich der Leitachsfunktion 12 ist. Beide vorhandenen Leitachsfunktionen 12,17 werden über die jeweiligen Leitachsgeneratoren 40,41 (z.B. Software im Rechenwerk) an den Datenbus 28 mit der entsprechenden Adressierung weitergegeben. Auf die Adressierung wird hier nicht näher eingegangen; sie erfolgt jedoch selektiv für jeden Einzelantrieb 9 nach Maßgabe von dessen Parametern, nämlich dem Abstand der zugehörigen Achsen 3,4 von der Abtaststelle 44 etc. Hierauf wird unten noch näher eingegangen.

Zusätzlich oder alternativ kann noch eine Korrekturfunktion 16 vorgesehen sein, die im wesentlichen lediglich die Korrekturen gegenüber der Leitachsfunktion 12 enthält und die - für die Achsen 3,4 der Gruppe 15 - direkt als auf den globalen Synchronisationstakt der Leitachsfunktion 12 angewendete Korrektur - und zwar an dem jeweiligen Antrieb 9 - einwirkt.

Zusätzlich zu den Transportachsen 3,4 können auch Bearbeitungsachsen 5,8 zu einer Gruppe 43 zusammengefasst werden. Auf diese wirkt eine eigene, z.B. zusätzliche, registerfolgende Leitachsfunktion. Es könnten auch alle Bearbeitungsachsen 5,6,7,8 zu einer Gruppe zusammengefasst sein. Hier sind die am weitesten von der Abtaststelle 44 entfernten Bearbeitungsachsen 5,8 zu einer Gruppe 43 zusammengefasst, da für diese eine evtl. (Rest-) Abweichung nach oben gesagtem besonders groß wird. Bzgl. der registerfolgenden Achsen 3,4;5,8 der Gruppen 15;43 erfolgt die Abtastung praktisch in einem Zentralbereich 22 bezogen auf die Längsrichtung 23 der Materialbahn 2, d.h. praktisch in der Mitte zwischen den genannten Achsen. Dadurch sind - wie oben ausgeführt - evtl. verbleibende (Register) Abweichungen der registerfolgenden Achsen untereinander minimiert.

Auf die Bearbeitungsachsen 5,8 der Gruppe 43 wirkt eine hinsichtlich des Rechenaufwandes einfache Korrektur ein. Diese ist dadurch gebildet, dass die Materialbahn in Produkte 25 einer Produktlänge 26 unterteilt wird, die im vorliegenden Fall mit dem Abstand der Registermarken 14 übereinstimmt (nicht notwendigerweise der Fall). Mittels der Registerregelung wird der Längsfehler 27 (hier übertrieben dargestellt) je Produktlänge 26 ermittelt. Für jede zu korrigierende Bearbeitungsachse 5,8 wird deren Längsabstand 45 zu der Abtaststelle 44 ermittelt und die Korrektur der Bearbeitungsachsen 5 durch das Produkt aus Längsfehler und Quotient: Längsabstand 45 / Produktlänge 26 gebildet.

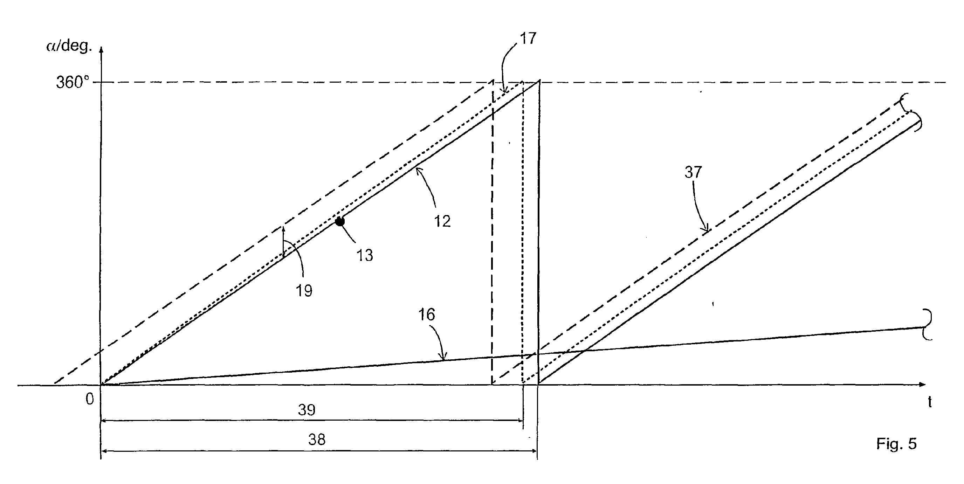

Schließlich zeigt Fig. 5 ein Diagramm verschiedener Leitachsfunktionen 12,17, 37 sowie einer Korrekturfunktion 16. Aufgetragen ist die Momentanposition in Winkelgraden über der Zeit t. Die Registerfolge-Leitachsfunktion 17 und die Registerfolge-Leitachsfunktion 37 sind Beispiele von aus der unveränderten Leitachsfunktion 12 ab geleiteten Korrektur-Leitachsfunktionen. Die Registerfolge-Leitachsfunktion 37 besteht aus lediglich einem Positionsoffset 19 gegenüber der Leitachsfunktion 12. Die Registerfolge-Leitachsfunktion 17 hat eine Getriebeableitung von der Leitachsfunktion 12; dadurch hat die Registerfolge-Leitachsfunktion 17 eine andere Steigung als die Leitachsfunktion 12 und damit auch eine andere Periodendauer 39 gegenüber der Periodendauer 38 der Leitachsfunktion 12. Aufgrund der größeren Steigung der Registerfolge-Leitachsfunktion 17 ist die zugehörige Periodendauer 39 kürzer.

In Fig. 2 ist darüber hinaus eine Korrekturfunktion 16 gezeigt. Diese gibt lediglich die Korrekturen gegenüber der Leitachsfunktion 12 wieder, um die die registerfolgenden Achsen 3,4;5,8 ggf. korrigiert werden. Anstatt der Momentanposition α in Winkelgrad könnte auch beispielsweise eine Winkelgeschwindigkeit als Gebersignal für die entsprechenden Leitachsfunktionen/Korrekturfunktionen vorgesehen sein.

### Bezugszeichenliste

- 1: Bearbeitungsmaschine
- 2: Materialbahn
- 3: Transportachse
- 4: Transportachse
- 5: Bearbeitungsachse
- 6: Bearbeitungsachse
- 7: Bearbeitungsachse
- 8: Bearbeitungsachse
- 9: Einzelantrieb
- 10: Antriebsregler
- 11: Leistungselektronik
- 12: Leitachsfunktion
- 13: Momentanposition der Leitachse
- 14: Registermarke
- 15: Gruppe von registerfolgenden Achsen
- 16: Korrekturfunktion
- 17: Registerfolge-Leitachsfunktion
- 18: -frei-
- 19: Positionsoffset
- 20: Offset-Addierer
- 21: Getriebeglied
- 22: Zentralbereich
- 23: Längsrichtung der Materialbahn
- 24: -frei-
- 25: einzelnes Produkt
- 26: Produktlänge
- 27: Längsfehler je Produktlänge
- 28: Datenbus
- 29: Sensor ,
- 30: Registerregler
- 31: Rechenglied
- 32: -frei-
- 33: angetriebene Walze
- 34: Andruckwalze
- 35: Drehachse der angetriebenen Walze
- 36: Drehachse der Andruckwalze
- 37: Registerfolge-Leitachsfunktion mit lediglich Positionsoffset
- 38: Periodendauer der Leitachsfunktion
- 39: Periodendauer der Registerfolge-Leitachsfunktion
- 40: Leitachsgenerator
- 41: Leitachsgenerator
- 42: Parameterleitung
- 43: Gruppe
- 44: Abtaststelle
- 45: Abstand der Bearbeitungsstelle von der Abtaststelle
- S: Sollwertgeber
- 101: Antriebsmechanik
- 102: Maschinenachse, abgeleitet
- 103: Antrieb
- L: Leitachse
- F: Folgeleitachse
- 105: Maschinenachse
- 106: Getriebemodul zur Ableitung der Folgeleitachse
- 107: Feingetriebemodul zur Ableitung der Folgeleitachse
- 108: der Ableitung der Folgeleitachse vorgeschaltete Offsetaddition
- 109: der Ableitung der Folgeleitachse nachgeschaltete Offsetaddition
- 110: Maschinenachse, abgeleitet
- 111: Maschinenachse, abgeleitet
- 116: zusätzlicher Positionsoffset
- 117: Gruppe von Achsen
- 118: nachgeordnete Leitachse
- 119: reale Leitachse
- 120: virtuelle Leitachse
- 121: Positioniermodul
- 122: Leitachszyklus
- 123: Synchronisationsmodul
- 124: vorgeschaltetes Offsetmodul
- 125: nachgeschaltetes Offsetmodul
- 126: Reglermodul
- 127: zusätzliches Offsetmodul
- 128: Folgeleitachszyklus
- 129: Leitachszyklus
- 130: (Antriebs-)Getriebemodul
- 131: Antriebs-Feingetriebemodul
- 132: Umschalter
- 133: Antriebs-Offsetmodul
- 134: Antriebs-Offsetaddition
- 135: Sollwertzyklus
- 136: mechanisches Getriebe
- 137: Motor
- 138: Maschine
- 139: von der Leitachse L direkt abgeleitete Maschinenachse
- 140: Förderrichtung
- 141: Abzugwickel
- 142: Aufrollwickel
- 143: Zugspannungsverstellung / Bahnspeicher
- 144: Materialbahn
- 145: Transportachse
- 146: Geber
- 147: Maschinenwelle

## Patentansprüche

1. Verfahren zum Betrieb von Maschinen (138) mit mehreren, synchronisierten Achsen (102,110,111,141,142,145), wobei die Achsen (102,110,111,141, 142,145) durch jeweils zugehörige Einzelantriebe (103) untereinander synchronisiert nach Maßgabe einer elektronischen, zeitlichen Leitachsfunktion angetrieben werden, die mit einer Momentanposition (13) einer Leitachse L korrespondiert, und die Bewegungen mehrerer, abgeleiteter Achsen (102, 110, 111) nach Maßgabe von Umsetzungsfunktionen, die jeweils vorbestimmten, mechanischen Umsetzungen (106, 107, 108, 109) bezüglich der Leitachse L entsprechen, von der Leitachse L abgeleitet werden, **dadurch gekennzeichnet, dass** alle Achsen (102,110,111) zumindest einer Gruppe (117) von Achsen, die sich hinsichtlich der Umsetzung (106, 107, 108, 109) entsprechen, einer elektronischen, zeitlichen Folgeleitachsfunktion folgen, die mit einer Momentanposition einer Folgeleitachse F korrespondiert und durch Verknüpfung der betreffenden Umsetzungsfunktion und der Leitachsfunktion gebildet wird.

2. Verfahren nach Anspruch 1, **dadurch gekennzeichnet, dass** die Umsetzungsfunktion einen durch die mechanische Umsetzung (108, 109) bestimmten Positionsoffset gegenüber der Momentanposition (13) der Leitachse (L) umfasst.

3. Verfahren nach Anspruch 1 oder 2, **dadurch gekennzeichnet, dass** die Umsetzungsfunktion einen durch die mechanische Umsetzung (108,109) bestimmten Drehzahloffset gegenüber der Momentangeschwindigkeit der Leitachse (L) umfasst.

4. Verfahren nach einem der Ansprüche 1 bis 3, **dadurch gekennzeichnet, dass** die Umsetzungsfunktion eine durch die mechanische Umsetzung (106, 107) bestimmte, einer Getriebeübersetzung bezüglich der Leitachse L entsprechende Funktion umfasst.

5. Verfahren nach einem der Ansprüche 1 bis 4, **dadurch gekennzeichnet, dass** eine manuelle und/oder nach Maßgabe eines Reglers, insbesondere eines Registerreglers, Zugreglers oder Tänzerreglers, gebildete Feinabstimmung (107) der Umsetzungsfunktion vorgesehen ist.

6. Verfahren nach einem der Ansprüche 1 bis 5, **dadurch gekennzeichnet, dass** ein Positionsoffset (108,109) der Umsetzungsfunktion vorgesehen ist.

7. Verfahren nach einem der Ansprüche 1 bis 6, **dadurch gekennzeichnet, dass** ein Drehzahloffset der Umsetzungsfunktion vorgesehen ist.

8. Verfahren nach einem der Ansprüche 5 - 7, **dadurch gekennzeichnet, dass** die Feinabstimmung (107) und/oder der Positionsoffset (108,109) und/oder der Drehzahloffset bezüglich eines Aktualisierungszyklus der beteiligten Leitachsfunktions-Sollwerte im Wesentlichen momentan erfolgt.

9. Verfahren nach einem der Ansprüche 1 bis 8, **dadurch gekennzeichnet, dass** ein zusätzlicher Positionsoffset (116) vorgesehen ist, welcher lediglich auf ein an den jeweiligen Antrieb (103) der Achse (102, 110, 111) einer Gruppe (117) übertragenes, nach Maßgabe der Folgeleitachse F generiertes Folgeleitachssignal einwirkt, so dass die betreffende Achse (102, 110, 111) um diesen Positionsoffset (116) gegenüber der Folgeleitachse F versetzt ist.

## Claims

1. Method for operating machines (138) having a plurality of synchronized axles (102, 110, 111, 141, 142, 145), the axles (102, 110, 111, 141, 142, 145) each being driven by means of respectively associated individual drives (103) synchronized with one another in accordance with an electronic chronological master axle function which corresponds to an instantaneous position (13) of a master axle L, and the movements of a plurality of derived axles (102, 110, 111) are derived from the master axle L in accordance with implementation functions which correspond to respectively predetermined mechanical implementations (106, 107, 108, 109) with respect to the master axle L, **characterized in that** all the axles (102, 110, 111) of at least one group (117) of axles which correspond in terms of the implementation (106, 107, 108, 109) follow an electronic chronological following master axle function which corresponds to an instantaneous position of a following master axle F and is formed by logically combining the respective implantation function and the master axle function.

2. Method according to Claim 1, **characterized in that** the implementation function comprises a position offset, determined by the mechanical implementation (108, 109), with respect to the instantaneous position (13) of the master axle (L).

3. Method according to Claim 1 or 2, **characterized in that** the implementation function comprises a rotational speed offset, determined by the mechanical implementation (108, 109), with respect to the instantaneous speed of the master axle (L).

4. Method according to one of Claims 1 to 3,
**characterized in that** the implementation function comprises a function which is determined by the mechanical implementation (106, 107) and corresponds to a gearbox transmission ratio with respect to the master axle L.

5. Method according to one of Claims 1 to 4,
**characterized in that** a fine tuning means (107) of the implementation function which is manual and/or formed in accordance with a regulator, in particular a register regulator, tension regulator or dancer regulator, is provided.

6. Method according to one of Claims 1 to 5, **characterized in that** a position offset (108, 109) of the implementation function is provided.

7. Method according to one of Claims 1 to 6, **characterized in that** a rotational speed offset of the implementation function is provided.

8. Method according to one of Claims 5-7, **characterized in that** the fine tuning means (107) and/or the position offset (108, 109) and/or the rotational speed offset takes place essentially instantaneously in terms of an updating cycle of the applicable master axle function setpoint values.

9. Method according to one of Claims 1 to 8, **characterized in that** an additional position offset (116) is provided which acts only on a following master axle signal which is transmitted to the respective drive (103) of the axle (102, 110, 111) of a group (117) and is generated in accordance with the following master axle F so that the respective axle (102, 110, 111) is offset by this position offset (116) with respect to the following master axle F.

## Revendications

1. Procédé d'exploitation de machines (138) comportant plusieurs axes synchronisés (102, 110, 111, 141, 142, 145), les axes (102, 110, 111, 141, 142, 145) étant synchronisés entre eux par des commandes individuelles (103) à chaque fois associées suivant une fonction d'axe directeur temporelle électronique qui est en correspondance avec une position momentanée (13) d'un axe directeur L,
et les mouvements de plusieurs axes dérivés (102, 110, 111) étant dérivés de l'axe directeur L suivant des fonctions de transposition qui correspondent à chaque fois à des transpositions mécaniques prédéterminées (106, 107, 108, 109) par rapport à l'axe directeur L,
**caractérisé en ce que**
tous les axes (102, 110, 111) d'au moins un groupe (117) d'axes, qui se correspondent du point de vue de la transposition (106, 107, 108, 109), suivent une fonction d'axe directeur de poursuite temporelle électronique qui est en correspondance avec une position momentanée d'un axe directeur de poursuite F et qui est formée par combinaison de la fonction de transposition considérée et de la fonction d'axe directeur.

2. Procédé selon la revendication 1,
**caractérisé en ce que**
la fonction de transposition comprend un décalage de position, déterminé par la transposition mécanique (108, 109), vis-à-vis de la position momentanée (13) de l'axe directeur (L).

3. Procédé selon la revendication 1 ou 2,
**caractérisé en ce que**
la fonction de transposition comprend un décalage de vitesse de rotation, déterminé par la transposition mécanique (108, 109), vis-à-vis de la vitesse momentanée de l'axe directeur (L).

4. Procédé selon l'une des revendications 1 à 3,
**caractérisé en ce que**
la fonction de transposition comprend une fonction déterminée par la transposition mécanique (106, 107) et correspondant à une multiplication par engrenage par rapport à l'axe directeur L.

5. Procédé selon l'une des revendications 1 à 4,
**caractérisé par**
un ajustement précis (107), manuel et/ou formé suivant un régulateur (en particulier un régulateur de registre, régulateur de traction ou régulateur de tension) de la fonction de transposition.

6. Procédé selon l'une des revendications 1 à 5,
**caractérisé par**
un décalage de position (108, 109) de la fonction de transposition.

7. Procédé selon l'une des revendications 1 à 6,
**caractérisé par**
un décalage de vitesse de rotation de la fonction de transposition.

8. Procédé selon l'une des revendications 5 à 7,
**caractérisé en ce que**
l'ajustement précis (107) et/ou le décalage de position (108, 109) et/ou le décalage de vitesse de rotation, par rapport à un cycle d'actualisation des valeurs de consigne participantes de la fonction d'axe directeur, s'effectue essentiellement de manière momentanée.

9. Procédé selon l'une des revendications 1 à 8,
**caractérisé en ce qu'**
un décalage de position (116) supplémentaire agit seulement sur un signal d'axe directeur de poursuite transmis à la commande respective (103) de l'axe (102, 110, 111) d'un groupe (117) et généré suivant l'axe directeur de poursuite F, de sorte que l'axe considéré (102, 110, 111) se trouve décalé, en faisant intervenir ce décalage de position (116), vis-à-vis de l'axe directeur de poursuite F.
